**Europäisches Patentamt**

**European Patent Office**

**Office européen des brevets**

(19)

(11) Veröffentlichungsnummer: **0 132 575**
**B1**

# (12) EUROPÄISCHE PATENTSCHRIFT

(45) Veröffentlichungstag der Patentschrift:
26.11.86

(21) Anmeldenummer: **84106923.0**

(22) Anmeldetag: **16.06.84**

(51) Int. Cl.⁴: **B 23 K 9/12,** B 23 K 9/10

(54) **Einrichtung zum Lichtbogenschweissen, insbesondere UP-Lichtbogenschweissen, mit einer oder mehreren abschmelzenden Elektroden.**

(30) Priorität: **21.06.83 DE 3322215**

(43) Veröffentlichungstag der Anmeldung:
**13.02.85 Patentblatt 85/7**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**DE-A-1 804 943**
**DE-B-2 262 963**

**(GESELLSCHAFT FÜR LINDE'S EISMASCHINEN AG.) DE-B-G 657 VIIId, 21h 30/17**

(73) Patentinhaber: **Thyssen Aktiengesellschaft vorm. August Thyssen- Hütte, Kaiser- Wilhelm- Strasse 100, D-4100 Duisburg (DE)**

(72) Erfinder: **Dilthey, Ulrich, Dr.- Ing., Kleiststrasse 2, D-8057 Eching (DE)**
Erfinder: **Kopp, Walter, Ing. grad., Elisabethstrasse 45, D-8044 Unterschleissheim (DE)**
Erfinder: **Plantikow, Ulrich, Dr.- Ing., Wülfrather Strasse 20, D-4000 Düsseldorf (DE)**

(74) Vertreter: **Patentanwaltsbüro Cohausz & Florack, Postfach 14 01 47, D-4000 Düsseldorf 1 (DE)**

EP 0 132 575 B1

## Beschreibung

Die Erfindung bezieht sich auf eine Einrichtung zum Lichtbogenschweißen, insbesondere UP-Lichtbogenschweißer mit einer oder mehreren abschmelzenden Elektroden, die jeweils aus einer Wechselstromquelle mit fallender Kennlinie gespeist und von einem Vorschubmittel vorgeschoben werden, wobei die Vorschubgeschwindigkeit von einem Regler, dem als Istwert für die Lichtbogenlänge die Lichtbogenspannung zugeführt wird, derart geregelt wird, daß die Lichtbogenlänge konstant ist.

Das Lichtbogenschweißen unter Verwendung einer Wechselstromquelle mit fallender Kennlinie hat gegenüber dem Lichtbogenschweißen unter Verwendung einer Gleichstromquelle mit nahezu waagerechter Spannungs-Strom-Kennlinie Vor- und Nachteile. Beim Lichtbogenschweißen mit waagerechter Kennlinie kann das Vorschubmittel auf konstante Vorschubgeschwindigkeit eingestellt werden. Die Lichtbogenlänge bleibt dabei im wesentlichen konstant, weil der Tendenz zu kleinerem Abstand der Elektrode von dem Werkstück wegen der waagerechten Kennlinie bei konstanter Lichtbogenspannung eine vergrößerte Stromstärke und damit größere Abschmelzgeschwindigkeit entgegenwirkt. Diesem Vorteil steht der Nachteil gegenüber, daß bei enger Nachbarschaft sich die Lichtbögen mit ihren Magnetfeldern gegenseitig ungünstig beeinflussen. Darüberhinaus erfordert der gleichzeitige Betrieb mehrerer Elektroden mit Gleichstrom eine entsprechend groß dimensionierte Rückleitung.

Mit dem gleichzeitigen Einsatz mehrerer Elektroden wird die Forderung nach großen Abschmelzleistungen erfüllt. Solche Forderungen ergeben sich beim Auftragsschweißen und insbesondere beim formgebenden Schweißen, bei dem ein Werkstück praktisch nur aus dem Schweißmaterial erstellt wird. Nicht selten werden mehr als 12 Elektroden gleichzeitig eingesetzt.

Untersuchungen mit einer Einrichtung der eingangs genannten Art haben ergeben, daß beim gleichzeitigen Einsatz mehrerer Elektroden, deren Lichtbogenlänge nach der Lichtbogenspannung geregelt wird, trotz gleicher Stromstärke an allen Elektroden die Abschmelzleistungen der einzelnen Elektroden unterschiedlich sind. Das Ergebnis dieser unterschiedlichen Abschmelzleistungen sind unterschiedlich hohe Schweißraupen von den nebeneinander eingesetzten Elektroden. Bei mehreren Auftragslagen führt das zu großen Dimensionsunterschieden. Ferner führen die unterschiedlichen Abschmelzleistungen zu einer nicht gleichmäßigen Vergütung des Werkstückes über dessen Querschnitt und dazu, daß die zunächst gleichen Drahtlängen nach unterschiedlich langer Zeit verbraucht sind. Für die Praxis bedeutet das daß die den Draht tragenden Spulen entweder zu unterschiedlichen Zeiten oder mit noch auf den Spulen befindlichen Restlängen gewechselt werden müssen.

Der Erfindung liegt die Aufgabe zugrunde, eine Einrichtung zum Lichtbogenschweißen der eingangs genannten Art zu schaffen, bei der die Abschmelzleistung des Schweißdrahtes konstant ist.

Diese Aufgabe wird erfindungsgemäß dadurch gelöst, daß ein weiterer Regler, dem als Istwert für die Abschmelzleistung die Vorschubgeschwindigkeit zugeführt wird, die Schweißstromstärke derart regelt, daß die Abschmelzleistung konstant ist.

Bei der erfindungsgemäße Einrichtung erfolgt nach wie vor vorrangig die Regelung der für die Schweißqualität wesentlichen Lichtbogenlänge über die Lichtbogenspannung. Die zusätzliche Regelung der Abschmelzleistung über die Vorschubgeschwindigkeit des Schweißdrahtes führt zu einer Verlagerung des Arbeitspunktes unter Konstanthaltung der Lichtbogenspannung. Beim gleichzeitigen Lichtbogenschweißen mit zwei oder mehr abschmelzenden Elektroden ist aufgrund der Regelung der Vorschubgeschwindigkeit gewährleistet, daß die Abschmelzleistung an allen Elektroden gleich ist.

Untersuchungen mit der erfindungsgemäßen Einrichtung haben ergeben, daß die Änderungen der Drahtvorschubgeschwindigkeit die zur Konstanthaltung der Lichtbogenlänge über den ersten Regler bewirkt werden, insbesondere bei kleiner Schweißgeschwindigkeit keine wesentlichen Änderungen der Abschmelzleistung verursachen. Ausgehend von dieser Erkenntnis ist deshalb nach einer Ausgestaltung der Erfindung dem Regler für die Schweißstromstärke ein Begrenzer zugeordnet, der nur bei Über- und/oder Unterschreiten des/oder der eingestellten Grenzwerte durch den Istwert der Vorschubgeschwindigkeit das Stellsignal an die Schweißstromquelle freigibt. Diese Ausgestaltung trägt zu einer Beruhigung der Regelung der Schweißstromstärke insofern bei, als eine Veränderung des Schweißstromes nur bei Verlassen des durch die Grenzwerte eingestellten Bereichs erfolgt. Durch einfache Versuche kann für die jeweilige Schweißaufgabe der Grenzbereich ermittelt werden, in dem die Vorschubgeschwindigkeit schwanken kann, ohne daß die Kennlinie der Stromquelle zum Zwecke der Konstanthaltung der Abschmelzleistung verändert werden muß. Die Beruhigung des Regelkreises ist beim Einsatz mechanisch zu verstellender Stellglieder, z.B. des Kerns bei einem Schweißstromtrafo sinnvoll.

Die für die jeweilige Schweißaufgabe optimale Sollwertvorgabe der Lichtbogenspannung erfolgt durch die Bedienungsperson an einem Sollwertgeber des Reglers. Um auszuschließen, daß eine irrtümliche Falscheinstellung zu fehlerhaften Schweißungen führt, sieht eine weitere Ausgestaltung der Erfindung vor, daß dem Regler für die Vorschubgeschwindigkeit ein mit der Lichtbogenspannung beaufschlagter Begrenzer zugeordnet ist, der bei Über- und

Unterschreiten der einen Bereich begrenzenden Grenzwerte durch die Lichtbogenspannung den Sollwertgeber im Sinne einer Anpassung an die Spannungswerte des eingestellten Bereiches verstellt. Über die Erfassung der Istwertspannung, die bei einem irrtümlich falsch eingestellten und außerhalb des Bereichs der eingestellten Grenzwerte liegenden Sollwertes wegen der Soll-Istwertabweichung aufgrund der Vergrößerung oder Verkleinerung der Vorschubgeschwindigkeit und damit auch des Abstandes der Elektrode vom Werkstück den vorgegebenen Bereich des Begrenzers verlassen will, ist es möglich, die Falscheinstellung des Sollwertes zu korrigieren. Die Korrektur des Sollwertes dauert so lange an, bis daß sich der Sollwert innerhalb der Grenzen des Begrenzers befindet. Diese Ausgestaltung der Erfindung gewährleistet also, daß trotz des falsch eingestellten Sollwertes eine ausreichende Schweißgüte gewährleistet ist.

Im folgenden wird die Erfindung anhand einer ein Ausführungsbeispiel der Einrichtung darstellenden Zeichnung näher erläutert.

Der von einer nicht dargestellten Haspel kommende Schweißdraht 15 wird von Vorschubmitteln, die aus einem Rollenpaar 16 mit mindestens einer angetriebenen Rolle und einem Gleichstrommotor 20 bestehen, in Richtung auf das Werkstück 17 vorgeschoben. Dabei passiert der Schweißdraht 15 einen Schleifkontakt 18, der wie das Werkstück 17 an einer Schweißstromquelle 14 angeschlossen ist. Bei Stromzufuhr brennt zwischen der vom Schweißdraht 15 gebildeten Elektrode und dem Werkstück 17 ein Lichtbogen.

Die Lichtbogenspannung wird über Leitungen 21, 22 von einem nicht dargestellten Meßwertgeber erfaßt und über eine Signalleitung 23 als Istwert einem Regler 25 zugeführt. Dieser Istwert wird dem Regler 25 mit einem an ihm einstellbaren Sollwert verglichen. Entsprechend der Soll-Istwertabweichung gibt der Regler über die Steuerleitung 24 ein Signal an den Gleichstrommotor 20, und zwar wird bei festgestellter zu großer Lichtbogenspannung die Vorschubgeschwindigkeit vergrößert und entsprechend bei zu kleiner festgestellter Lichtbogenspannung die Vorschubgeschwindigkeit vermindert, so daß im Ergebnis der Lichtbogen 19 die gewünschte vorgegebene Länge hat.

Die Lichtbogenspannung wird außerdem über eine Signalleitung 28 einem Begrenzer 26 zugeführt, der auf einen unteren Grenzwert und einen oberen Grenzwert einstellbar ist. Dieser Begrenzer 26 liefert ein Steuersignal über die Leitung 29 an einen Motor 31, der auf den Sollwertgeber 30 des Reglers 25 verstellend einwirkt.

An dem Gleichstrommotor 20 ist ein Tachogenerator 32 angeschlossen, der ein die Vorschubgeschwindigkeit repräsentierendes Signal über eine Leitung 36 an einen weiteren Regler 37 mit einem Stellglied 40 für die Vorschubgeschwindigkeit und über eine Leitung 38 an einen weiteren Begrenzer 33 liefert. Der Begrenzer 33 ist auf einen unteren und einen oberen Grenzwert für die Vorschubgeschwindigkeit eingestellt. Nur bei einem außerhalb dieses Bereiches liegenden Istwert der Vorschubgeschwindigkeit gibt der Begrenzer 33 über eine Signalleitung 39 ein Signal an den Regler 37, damit dieser entsprechend der Soll-Istwertabweichung ein Stellsignal über eine Steuerleitung 12 an einen Motor 34 gibt, der eine Verstellung des Sollwertes der Stromstärke bewirkt, so daß aufgrund des inneren Regelkreises der Stromquelle 14 eine Anpassung der Iststromstärke an die Sollstromstärke erfolgt.

Die erfindungsgemäße Einrichtung arbeitet auf folgende Art und Weise:

Nach Festlegung der Grenzwerte an den Begrenzern 26, 33 stellt die Bedienungsperson an den Sollwertgebern 30,35 die Lichtbogenspannung und die Stromstärke ein. Nach Zündung des Lichtbogens 19 erfolgt in Abhängigkeit von dem Soll-Istwertvergleich der Lichtbogenspannung und damit auch der Länge des Lichtbogens 19 die Einstellung der Vorschubgeschwindigkeit am Motor 20 durch das Stellsignal des Reglers 25 über die Leitung 24. Sofern die Vorschubgeschwindigkeit den am Stellglied 40 des Reglers 37 eingestellten Sollwert, der ein Maß für die Abschmelzleistung ist, nicht entspricht, gibt der Regler 37 über die Leitung 12 ein Stellsignal an den Motor 34 zur Veränderung der Schweißstromstärke. So wird im Falle einer zu geringen Vorschubgeschwindigkeit die Schweißstromstärke vergrößert. Dies führt zu einem schnelleren Abbrand und damit zu einer Vergrößerung der Länge des Lichtbogens 19. Die Vergrößerung der Lichtbogenlänge wird durch den Regler 25 mit einer größeren Vorschubgeschwindigkeit beantwortet.

Auf diese Art und Weise ist es also mit der erfindungsgemäßen Einrichtung möglich, beim Lichtbogenschweißen mit fallender Spannungs-Stromkennline unter Beibehaltung der Lichtbogenlänge für ein optimales Schweißergebnis die Abschmelzleistung konstant zu halten.

Damit die der Konstanthaltung der Lichtbogenlänge dienenden kleineren Änderungen der Drahtvorschubgeschwindigkeit nicht zu einer beachtlichen Änderung der Abschmelzleistung führen, ist vorgesehen, dem Regler 37 einen Begrenzer 33 zuzuordnen. Dieser Begrenzer 33 gibt den Regler 37 für die Ausgabe eines Stellsignals nur frei, wenn die Vorschubgeschwindigkeit außerhalb eines eingestellten Toleranzbereichs liegt.

Der Begrenzer 26 hat die Aufgabe, irrtümliche Falscheinstellungen am Sollwertsteller 30 zu korrigieren. Dies geschieht dadurch, daß der Begrenzer 26 ein Steuersignal 29 dann liefert, wenn die Lichtbogenspannung einen eingestellten Toleranzbereich verläßt. In diesem

Fall verstellt der Stellmotor 31 den Sollwertgeber 30 so lange,bis sein Sollwert innerhalb des vorgebenen Bereichs liegt.

Die erfindungsgemäße Einrichtung ist nicht nur aber vorzugsweise zum Einsatz mit mehreren gleichartigen Einrichtungen geeignet. Solche Einrichtungen gewährleisten, daß in jedem Fall die gleiche Abschmelzleistung erbracht wird. Für das eingangs erläuterte Beispiel bedeutet das, daß bei gleichem Vorrat an Schweißdraht für alle Einrichtungen die Schweißdrähte gleichzeitig verbraucht sind. Wegen des den Schweißelektroden zugeführten Wechselstroms kommt es nicht zu sich gegenseitig beeinflussenden Magnetfeldern, so daß die Schweißelektroden eng benachbart eingesetzt werden können. Die Wechselstromquellen können bezüglich der Phasenlage der Wechselströme derart miteinander kombiniert werden, daß kein einen großen Strom führender Rückleiter erforderlich ist. Insgesamt bietet also die erfindungsgemäße Einrichtung gegenüber einer mit Gleichstrom arbeitenden Einrichtung mit einer Gleichstromquelle mit waagerechter Spannungs-Stromkennlinie erhebliche Vorteile.

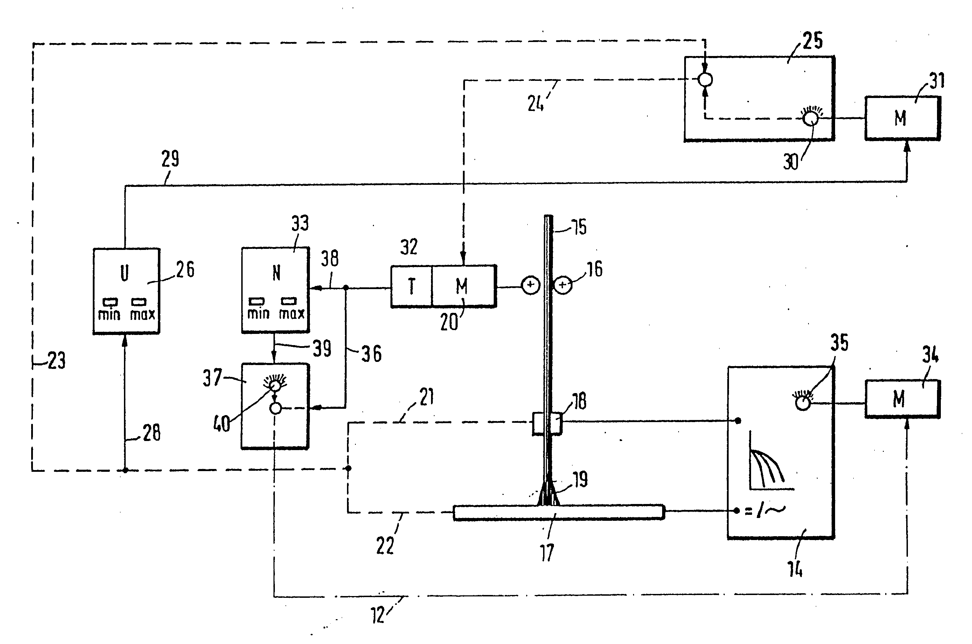

## Patentansprüche

1- Einrichtung zum Lichtbogenschweißen, insbesondere UP-Lichtbogenschweißen mit einer oder mehreren abschmelzenden Elektroden (15), die jeweils aus einer Wechselstromquelle (14) mit fallender Kennlinie gespeist und von einem Vorschubmittel (16, 20) vorgeschoben werden, wobei die Vorschubgeschwindigkeit von einem Regler (25), dem als Istwert für die Lichtbogenlänge die Lichtbogenspannung zugeführt wird, derart geregelt wird, daß die Lichtbogenlänge konstant ist,
dadurch gekennzeichnet,
daß ein weiterer Regler (37), dem als Istwert für die Abschmelzleistung die Vorschubgeschwindigkeit zugeführt, die Schweißstromstärke derart regelt, daß die Abschmelzleistung konstant ist.

2. Einrichtung nach Anspruch 1,
dadurch gekennzeichnet,
daß dem Regler (37) für die Schweißstromstärke ein Begrenzer (33) zugeordnet ist, der nur bei Über- und/oder Unterschreiten des/oder der eingestellten Grenzwerte durch den Istwert der Vorschubgeschwindigkeit das Stellsignal an die Schweißstromquelle (14) freigibt.

3. Einrichtung nach Anspruch 1 oder 2,
dadurch gekennzeichnet,
daß dem Regler (25) für die Vorschubgeschwindigkeit ein mit der Lichtbogenspannung beaufschlagter Begrenzer (26) zugeordnet ist, der bei Über- und Unterschreiten der einen Bereich begrenzenden Grenzwerte durch den Istwert der Lichtbogenspannung den Sollwertgeber (30) im Sinne einer Anpassung an die Spannungswerte des eingestellten Bereichs verstellt.

## Claims

1. Arc welding device, in particular for submerged arc welding, comprising one or several consumable electrodes (15), each of which is energized by an alternating current source (14) with decreasing characteristic curve, and each of which is advanced by a feed device (16,20), whereby the feed velocity is controlled by a regulator (25), to which is fed the welding arc voltage as actual value for the welding arc length, so that the welding arc length is constant,
characterized in that
a further regulator (37), to which is fed the feed velocity as actual value for the consumption-rate, controls the welding current voltage so that the consumption-rate is constant.

2. Device as defined by claim 1,
characterized in that,
regulator (37) for the welding current voltage is correlated to a limiter (33) which only in case the adjusted limit values are exceeded or not reached by the actual value of the feed velocity releases the control signal to welding current source (14).

3. Device as defined by either of claims 1 or 2,
characterized in that
regulator (25) for feed velocity is correlated to a limiter (26) loaded with the welding arc voltage which in case the limit values limiting a certain range are exceeded or not reached by the actual value of the arc welding voltage adjusts setting means (30) for adaption to the voltage values of the rated range.

## Revendications

1.- Dispositif pour le soudage à l'arc électrique, en particulier le soudage à l'arc électriques sous flux avec une ou plusieurs électrodes fusibles (15), qui sont chaque fois alimentées à partir d'une source de courant alternatif (14) à courbe caractéristique descendante et sont avancées par un dispositif d'avance (16,20), la vitesse d'avance étant réglée par un régulateur (25) auquel est envoyée, en tant que valeur instantanée de la longueur de l'arc électrique, la tension de l'arc électrique, de telle manière que la longueur de l'arc électrique soit constante, caractérisé par le fait qu'un second régulateur (37) auquel est envoyée, en tant que valeur instantanée du débit de fusion, la vitesse d'avance, règle l'intensité du courant de soudage de telle manière que le debit de fusion soit constant.

2.- Dispositif selon la revendication 1, caractérisé par le fait qu'un limiteur (37) est adjoint au régulateur (37) d'intensité du courant de soudage, qui n'émet le signal de commande à la source de courant de soudage (14) que lors d'un dépassement positif et/ou négatif de la/ou des valeur(s) limitée(s) réglée(s) par la valeur instantanée de la vitesse d'avance.

3.- Dispositif selon la revendication 1 ou 2, caractérisé par le fait qu'un limiteur (26) alimenté par la tension de l'arc électrique est adjoint au régulateur (25) de la vitesse d'avance, qui règle l'émetteur de valeur prescrite (30) dans le sens d'une adaptation aux valeurs de tension de l'étendue réglée, lors d'un dépassement positif ou négatif de la valeur limite limitant une étendue par la valeur instantanée de la tension de l'arc électrique.

0 132 575